# EUROPEAN PATENT SPECIFICATION

(11) **EP 4 600 534 B1**
(45) Date of publication and mention of the grant of the patent: **25.11.2026**
(21) Application number: 25154630.5
(22) Date of filing: 29.01.2025
(51) Int. Cl.: F16L 3/13, F16B 9/00, F16L 41/08, F16L 41/12, F16K 27/00, F16K 31/60

(54) **ADAPTER AND FLOW CONTROL VALVE ATTACHING STRUCTURE USING SUCH AN ADAPTER**
ADAPTER UND BEFESTIGUNGSSTRUKTUR FÜR EIN DURCHFLUSSREGELVENTIL MIT EINEM SOLCHEN ADAPTER
ADAPTATEUR ET STRUCTURE DE FIXATION DE SOUPAPE DE RÉGULATION DE DÉBIT UTILISANT UN TEL ADAPTATEUR

(30) Priority: 08.02.2024 JP 2024017914
(43) Date of publication of application: 13.08.2025
(73) Proprietor: SMC Corporation, Tokyo 104-0031 (JP)
(72) Inventor: YOSHIWARA, Masahiko, Ibaraki, 3002493 (JP); ALI, Syed, Buckinghamshire, MK8 0AN (GB)
(74) Representative: Keil & Schaafhausen Patentanwälte PartGmbB

(56) References cited:
- CN-U- 216 281 553
- JP-S- 1 520 214
- KR-U- 950 014 086
- US-A- 4 591 285
- US-A1- 2013 299 726

## Description

### Technical Field

The present invention relates to an adapter for attaching, to a plate, a flow control valve having a flow adjusting part at a distal end of a second body, which projects from an intermediate part of a first body, and a flow control valve attaching structure using the adapter.

### Background Art

Various types of flow control valves are known in the art, which have a flow adjusting part at a distal end of a second body projecting from an intermediate part of a first body. As described in PTLs 1 and 2, for example, these conventional flow control valves include a first cylindrical part (first body), a second cylindrical part extending downward from an intermediate part of the first cylindrical part, a third cylindrical part (second body) protruding upward from an upper end of the second cylindrical part, and a flow rate adjusting handle (flow adjusting part) disposed at a distal end of the third cylindrical part.

Such a flow control valve is used in a state of being attached to a plate, for example, and it is conceivable to attach the flow control valve by using a nut, for example. However, a nut fastening work is a work using a tool, and the preparation of the tool and the fastening work tend to be troublesome. Therefore, a technique that facilitates the work for attaching the flow control valve to the plate is desired.

Further adapters and fasteners are disclosed in US 2013/299726 A1, US 4 591 285 A, KR 950 014 086 U, JP 1 520214 S, and CN 216 281 553 U.

### Citation List

### Patent Literature

PTL 1: Domestic Re-publication of PCT International Publication for Patent Application No. 2011/024275
PTL 2: Japanese Registered Design No. 1520214

### Summary of Invention

### Technical Problem

Therefore, a technical object of the present invention is to provide an adapter that can facilitate the work for attaching, to a plate, a flow control valve having a flow adjusting part at a distal end of a second body, which projects from an intermediate part of a first body, and a flow control valve attaching structure using the adapter.

### Solution to Problem

In order to solve the above problem, an adapter according to the present invention is an adapter for attaching a flow control valve through an attachment hole in a plate. The flow control valve includes a first body provided with input/output ports at both ends thereof, and a second body projecting upward from an intermediate part in a longitudinal direction of the first body and having a flow adjusting part at an upper end thereof. The adapter includes: a ring part having a lower surface to be brought into contact with a periphery of the attachment hole in a front surface of the plate and allowing the flow adjusting part to pass through the attachment hole toward a front surface side; a first holding leg portion and a second holding leg portion extending downward from the lower surface of the ring part at both ends in a radial direction thereof and tightly holding the second body of the flow control valve from both sides in a state of projecting toward a back surface side of the plate through the attachment hole; and a lock arm connecting the first and second holding leg portions to each other. A base end of the lock arm is pivotably connected to a distal end of the first holding leg portion, and a distal end of the lock arm has an engaged portion engageable with and disengageable from an engaging portion provided at a distal end of the second holding leg portion.

In this case, it is preferable that the ring part be provided with a pair of fitting protrusions protruding from the lower surface thereof at both ends in the radial direction thereof, and the fitting protrusions have side surfaces to be brought into contact with an inner surface of the attachment hole.

It is also preferable that one of the side surfaces of the fitting protrusions be provided with a projection to be engaged with an engagement groove provided in the inner surface of the attachment hole in the plate.

It is also preferable that the fitting protrusions have distal end surfaces at distal ends thereof, and the distal end surfaces of the fitting protrusions be brought into contact with the flow control valve to enable positioning of the flow control valve in the upward direction.

It is also preferable that the ring part be further provided with a pair of spring locking pieces extending downward from the lower surface thereof at both ends in the radial direction thereof, and each of the pair of spring locking pieces be inclined radially outward toward a distal side and be elastically deformable radially inward.

It is also preferable that the spring locking pieces be provided with steps facing a base side thereof to be brought into contact with a back surface of the plate, and the steps include a plurality of steps formed in a shape of stairs on outer surfaces of the spring locking pieces facing radially outward. It is also preferable that the pair of spring locking pieces be disposed on radially outer sides of the first and second holding leg portions, guide plates extending downward be connected to distal ends of the pair of spring locking pieces, the guide plates be inclined radially inward from the distal ends of the pair of spring locking pieces toward a lower side, and lower ends of the guide plates be connected to the holding leg portion adjacent to the guide plate.

It is also preferable that; the lock arm include an arm body portion connected to the distal end of the first holding leg portion, an arm bent portion protruding from a distal end of the arm body portion, and the engaged portion provided at a distal end of the arm bent portion; the engaged portion include a projection projecting from the distal end of the arm bent portion; the engaging portion of the second holding leg portion include a recess formed in an outer surface of the second holding leg portion and engageable with the projection; and a slope guide surface inclined radially outward toward the recess and guiding movement of the projection be provided on the outer surface of the second holding leg portion, at a position closer to a distal end than the recess is.

It is also preferable that the first and second holding leg portions be each provided with a stopper portion protruding radially inward on an inner surface thereof, and the stopper portion have a contact surface for supporting the flow control valve tightly held between the first and second holding leg portions from below.

A flow control valve attaching structure according to the present invention is a flow control valve attaching structure in which the flow control valve having a flow adjusting part is formed by being attached to an attachment hole in a plate via an adapter. The flow control valve includes a first body provided with input/output ports at both ends thereof, and a second body projecting upward from an intermediate part in a longitudinal direction of the first body and having the flow adjusting part at an upper end thereof. The plate has the attachment hole through which the flow adjusting part can pass. The adapter includes a ring part to be brought into contact with a periphery of the attachment hole in a front surface of the plate, a first holding leg portion and a second holding leg portion extending downward from the lower surface of the ring part at both ends in a radial direction thereof to tightly hold the flow control valve from both sides, and a lock arm that connects the first and second holding leg portions to each other. A base end of the lock arm is pivotably connected to a distal end of the first holding leg portion, and a distal end of the lock arm has an engaged portion engageable with and disengageable from an engaging portion provided at a distal end of the second holding leg portion. The ring part is in contact with the front surface of the plate, the first and second holding leg portions protrude toward a back surface side of the plate through the attachment hole, the flow adjusting part passes through the attachment hole toward a front surface side, the second body of the flow control valve is tightly held between the first and second holding leg portions, and the first and second holding leg portions are connected to each other by the lock arm.

### Advantageous Effects of Invention

As described above, according to the present invention, it is possible to provide an adapter that can facilitate the work for attaching, to an attachment hole in a plate, a flow control valve having a flow adjusting part at a distal end of a second body, which projects from an intermediate part of a first body, and a flow control valve attaching structure using the adapter.

### Brief Description of Drawings

[Fig. 1] Fig. 1 is a perspective view of a flow control valve attaching structure according to an embodiment of the present invention.
[Fig. 2] Fig. 2 is a front view of the flow control valve attaching structure.
[Fig. 3] Fig. 3 is a perspective view of a flow control valve.
[Fig. 4] Fig. 4 is a plan view of a plate.
[Fig. 5] Fig. 5 is a perspective view of an adapter as viewed obliquely from below.
[Fig. 6] Fig. 6 is a front view of the adapter in a state in which a lock arm is open.
[Fig. 7] Fig. 7 is a plan view of the adapter.
[Fig. 8] Fig. 8 is a back view of the adapter.
[Fig. 9] Fig. 9 is a front view of the adapter in a state in which the lock arm is closed.
[Fig. 10] Fig. 10 is a perspective view of the adapter without a ring part, as viewed obliquely from above.
[Fig. 11] Fig. 11 is a perspective view of the adapter as viewed obliquely from below.
[Fig. 12] Fig. 12 is a sectional view of the flow control valve attaching structure, taken along line XII-XII in Fig. 2.

### Description of Embodiments

An adapter and a flow control valve attaching structure using the adapter according to the present invention will be described below. In this embodiment, the adapter is included in the flow control valve attaching structure, and therefore the adapter will be described in the description of the flow control valve attaching structure.

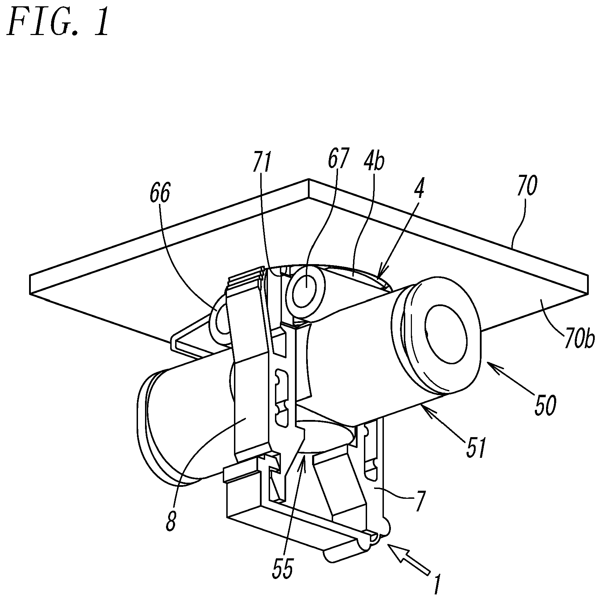

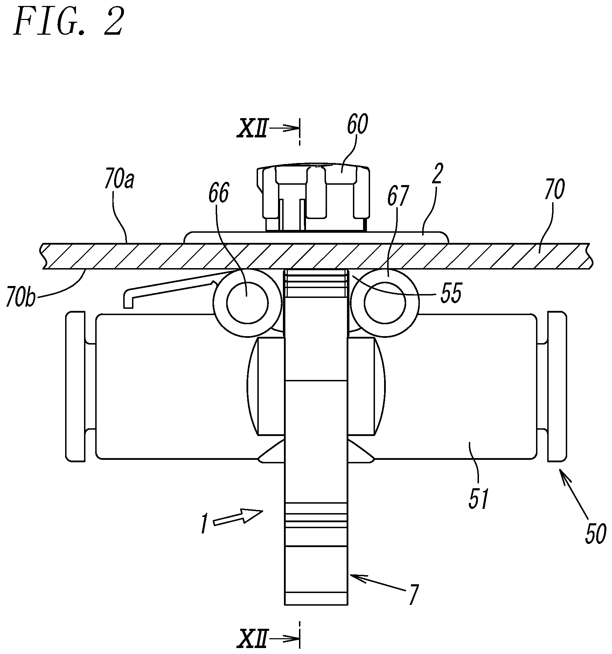

First, the flow control valve attaching structure will be described. As shown in Figs. 1 and 2, in the flow control valve attaching structure, a flow control valve 50, which includes a first body 51 extending in the longitudinal direction and a second body 55 projecting upward from an intermediate part of the first body 51 in the longitudinal direction and having a dial part 60 (flow adjusting part) at the upper end thereof, is attached through an attachment hole 71 in a plate 70.

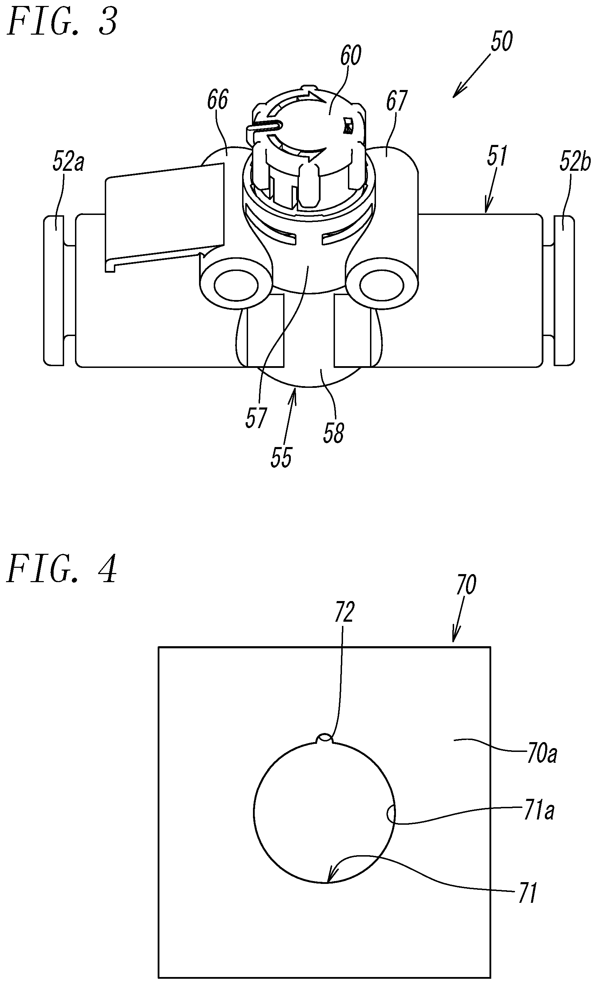

As shown in Fig. 3, the flow control valve 50 includes: the first body 51 having input/output ports 52a and 52b at the ends thereof; the second body 55 projecting upward from the intermediate part of the first body 51 in the longitudinal direction and extending downward from the lower end of the first body 51 and having the dial part 60 at the upper end thereof; and a pair of cylindrical attachment parts 66 and 67 disposed on both sides of the upper end of the second body 55 and extending in the direction perpendicular to the longitudinal direction. In this embodiment, the pair of attachment parts 66 and 67 are provided in a state of spanning both the intermediate part of the first body 51 in the longitudinal direction and the upper end of the second body 55.

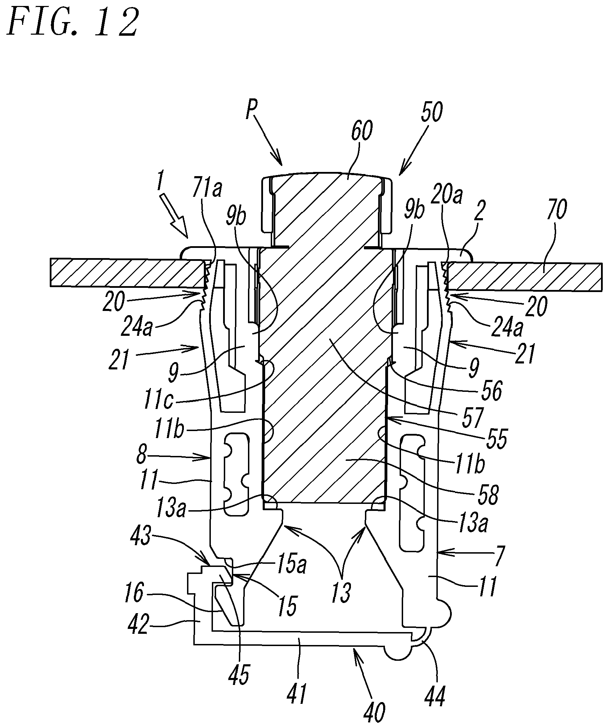

The second body 55 includes a large diameter portion 57 formed in a cylindrical shape and a small diameter portion 58 connected to the lower end of the large diameter portion 57 and having a diameter smaller than that of the large diameter portion 57. The large diameter portion 57 and the small diameter portion 58 are arranged coaxially. The small diameter portion 58 extends from the lower end of the first body 51. The large diameter portion 57 has, in the outer circumferential surface at the lower end thereof, a contact-receiving surface 56 facing downward and formed in an annular shape (see Fig. 12). The dial part 60 is formed in a cylindrical shape and is disposed at the upper end of the large diameter portion 57 so as to be rotatable about the axis. The outer diameter of the dial part 60 is slightly smaller than the outer diameter of the large diameter portion 57. For convenience of description, the longitudinal direction may be referred to as a "left-right direction", and the direction orthogonal to the longitudinal direction and the vertical direction may be referred to as a "front-rear direction".

As shown in Fig. 4, the plate 70 is a plate-like member having a constant thickness and is provided with, at the center thereof, a circular attachment hole 71 through which the dial part 60 can pass. In this embodiment, an engagement groove 72 is provided in an inner surface 71a of the attachment hole 71.

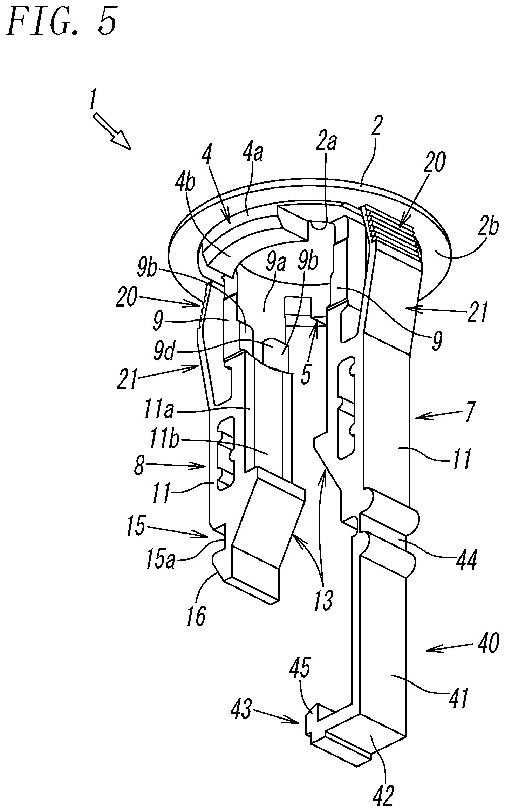

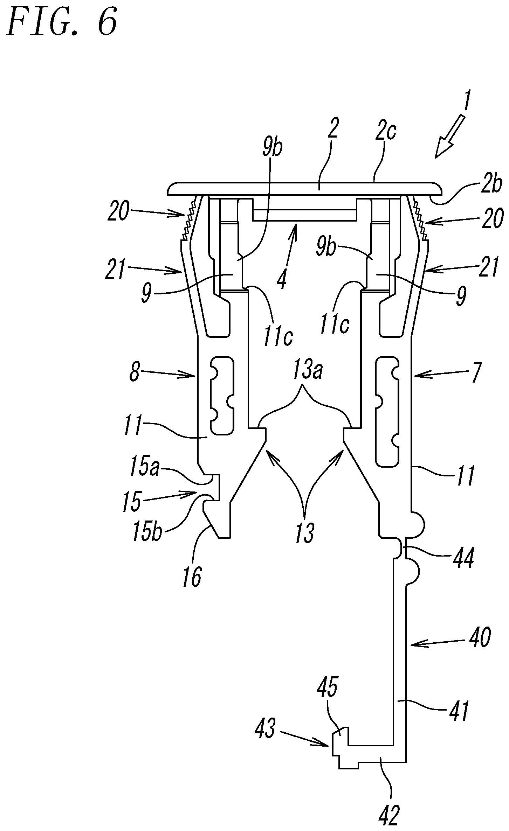

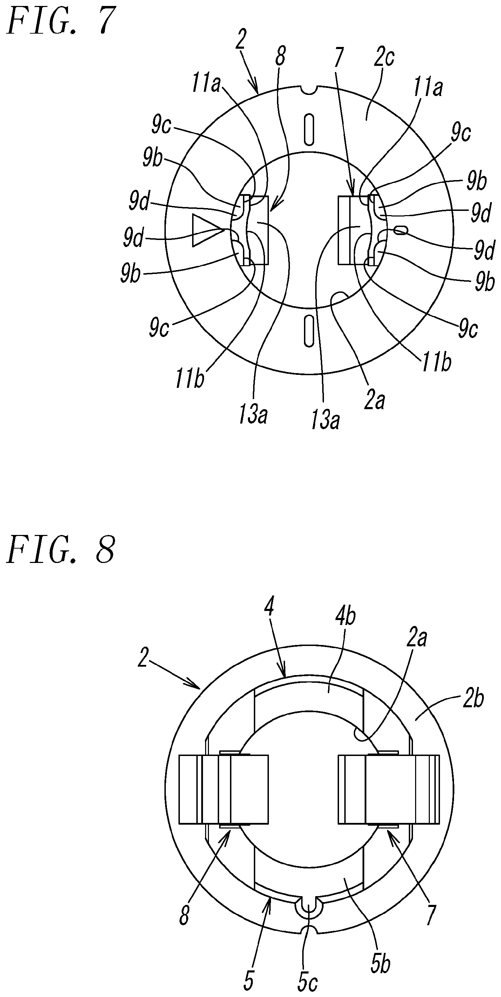

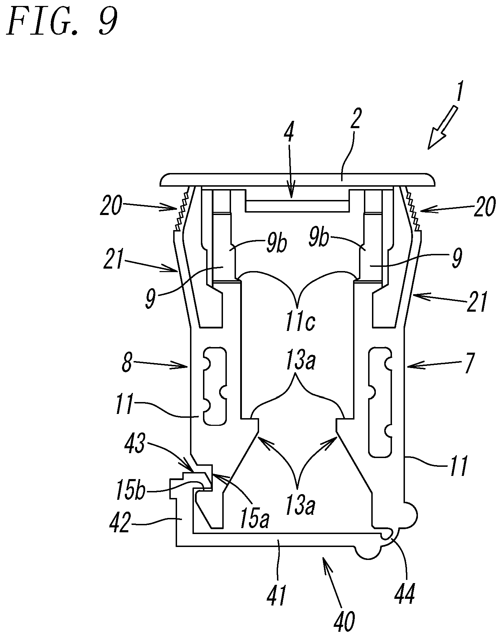

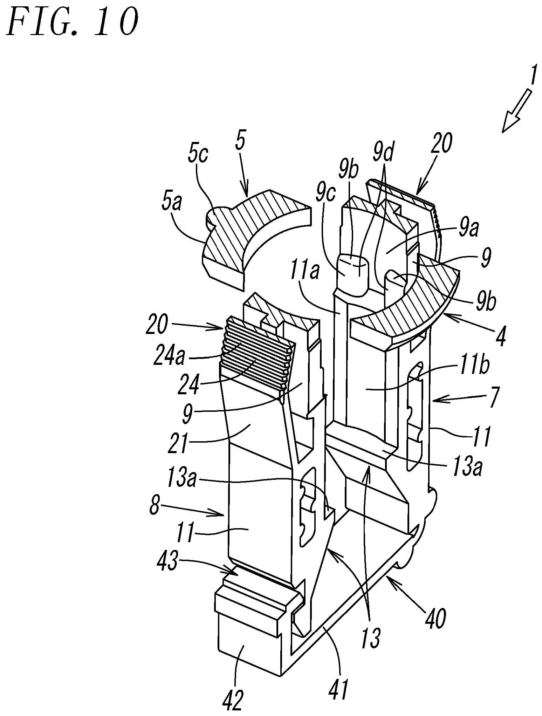

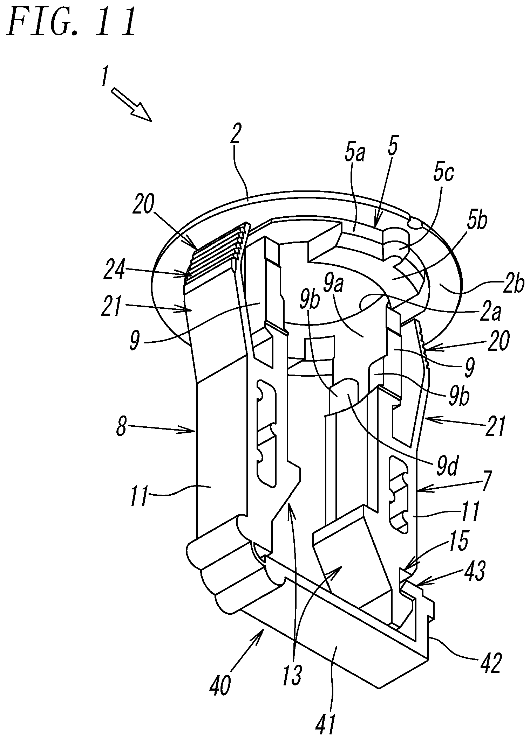

Next, the adapter 1 will be described. As shown in Figs. 5 to 12, the adapter 1 includes: a ring part 2 having a lower surface 2b to be brought into contact with the periphery of the attachment hole 71 in the front surface 70a of the plate 70 and allowing the dial part 60 (flow adjusting part) to pass through the attachment hole 71 to the front surface 70a side; a first holding leg portion 7 and a second holding leg portion 8 extending downward from the lower surface 2b of the ring part 2 at both ends in the radial direction thereof and tightly holding the flow control valve 50 from both sides in a state of projecting toward a back surface 70b side of the plate 70 through the attachment hole 71; a lock arm 40 connecting the first holding leg portion 7 and the second holding leg portion 8 to each other; and a spring locking piece 20 to be brought into contact with the back surface 70b of the plate 70 to attach the adapter 1 to the plate 70. In this embodiment, the adapter 1 is molded in one piece of, for example, a synthetic resin material.

The ring part 2 is formed in an annular shape and is provided with an insertion hole portion 2a extending between an upper surface 2c and the lower surface 2b thereof. In this embodiment, the inner diameter of the insertion hole portion 2a is smaller than the inner diameter of the attachment hole 71, and has a size that allows the second body 55 of the flow control valve 50 to pass therethrough.

The ring part 2 is provided with a pair of fitting protrusions 4 and 5 protruding from the lower surface 2b at both ends in the radial direction thereof. The fitting protrusions 4 and 5 have side surfaces 4a and 5a to be brought into contact with the inner surface 71a of the attachment hole 71. In this embodiment, the side surfaces 4a and 5a face radially outward and are curved along the inner surface 71a of the attachment hole 71. By bringing the fitting protrusions 4 and 5 into contact with the inner surface 71a of the attachment hole 71, it is possible to radially position the adapter 1 with respect to the plate 70.

The fitting protrusions 4 and 5 have distal end surfaces 4b and 5b formed at the distal ends thereof. In this embodiment, the distal end surfaces 4b and 5b are formed in a planar shape extending in the left-right direction. The distal end surfaces 4b and 5b protrude downward from the back surface 70b of the plate 70 in a state in which the lower surface 2b of the ring part 2 is in contact with the front surface 70a of the plate 70 (see Fig. 1). When the flow control valve 50 is inserted into the adapter 1 and the pair of attachment parts 66 and 67 of the first body 51 come into contact with distal end surfaces 4b and 5b, the plate 70 is positioned with respect to the flow control valve 50 in the upward direction in a state in which the dial part 60 has moved to a positioning position P (see Fig. 12), at which the dial part 60 projects to the front surface 70a side of the plate 70.

Of the fitting protrusions 4 and 5, the fitting protrusion 5 disposed on the rear side is provided with a projection 5c projecting radially outward on the side surface 5a thereof. The projection 5c can be engaged with an engagement groove 72 (see Fig. 4) formed in the attachment hole 71 in the plate 70 to prevent the adapter 1 from rotating in the circumferential direction with respect to the plate 70.

In this embodiment, the first holding leg portion 7 and the second holding leg portion 8 are disposed on the lower surface 2b of the ring part 2, at positions shifted by 90° in the circumferential direction with respect to the pair of fitting protrusions 4 and 5. Because the first and second holding leg portions 7 and 8 are formed symmetrically, the first holding leg portion 7 will be described, and the second holding leg portion 8 will be denoted by reference numerals corresponding to those in the first holding leg portion 7 and the description thereof will be omitted.

The first holding leg portion 7 includes an upper leg portion 9 extending downward from the lower surface of the ring part 2, and a lower leg portion 11 connected to the lower end of the upper leg portion 9 and having a larger cross-sectional area than the upper leg portion 9. The upper leg portion 9 is formed in a rectangular parallelepiped shape in which the width in the front-rear direction is shorter than the length in the vertical direction. An inner surface 9a of the upper leg portion 9 is curved along the same plane as the plane of the inner surface of the insertion hole portion 2a. Two projections 9b projecting radially inward are provided with a distance therebetween in the circumferential direction on both sides in the circumferential direction of the lower end of the inner surface 9a of the upper leg portion 9. These projections 9b and 9b are each provided with, at the distal end thereof, a planar portion 9c extending in the front-rear direction and a curved portion 9d formed at a radially inner end of the planar portion 9c. These projections 9b and 9b are disposed so as to face the projections 9b and 9b provided on the second holding leg portion 8, and the four curved portions 9d tightly hold the large diameter portion 57 of the flow control valve 50 disposed between the first and second holding leg portions 7 and 8.

The lower leg portion 11 is formed in a rectangular parallelepiped shape in which the width in the front-rear direction is shorter than the length in the vertical direction. Although the lower leg portion 11 has the same width as the upper leg portion 9, the thickness of the lower leg portion 11 in the left-right direction is larger than the thickness of the upper leg portion 9, and the length of the lower leg portion 11 in the vertical direction is larger than the length of the upper leg portion 9. The upper leg portion 9 is connected to the upper end of the lower leg portion 11 on the inner side in the left-right direction. Thus, the outer portion of the lower leg portion 11 in the left-right direction is located outside the upper leg portion 9.

An inner surface 11a of the lower leg portion 11 has a curved surface 11b curved along the outer circumferential surface of the small diameter portion 58 of the second body 55 of the flow control valve 50. In this embodiment, in a state in which the small diameter portion 58 of the second body 55 is inserted between the curved surfaces 11b and 11b of the first and second holding leg portions 7 and 8, the curved surfaces 11b and 11b tightly hold the small diameter portion 58 from both sides.

A stopper portion 13 protruding radially inward is provided below the curved surface 11b of the lower leg portion 11. A contact surface 13a extending in the front-rear direction and facing upward is formed at the upper surface of the stopper portion 13. The contact surface 13a can support the flow control valve 50 tightly held between the first and second holding leg portions 7 and 8 from below.

Furthermore, in this embodiment, an annular contact surface 11c (see Fig. 12) facing upward is also formed at the upper end of the inner surface 11a of the lower leg portion 11. The contact surface 11c can support the contact-receiving surface 56 (see Fig. 12) formed on the large diameter portion 57 of the second body 55 of the flow control valve 50 tightly held between the first and second holding leg portions 7 and 8 from below.

The ring part 2 is provided with a pair of spring locking pieces 20 and 20 extending downward from the lower surface 2b thereof, at both ends in the radial direction. Each of the pair of spring locking pieces 20 and 20 is inclined radially outward toward the distal end side and is elastically deformable radially inward. In this embodiment, the pair of spring locking pieces 20 are formed in a plate shape and are disposed on the radially outer side of the upper leg portions 9 and 9 of the first and second holding leg portions 7 and 8. The spring locking pieces 20 are inclined such that the distance between the upper ends thereof is smaller than the inner diameter of the attachment hole 71 and the distance between the lower ends thereof is larger than the inner diameter of the attachment hole 71.

Each of the spring locking pieces 20 is provided with upwardly facing steps 24 to be brought into contact with the back surface 70b of the plate 70. In this embodiment, contact surfaces 24a that can be brought into contact with the back surface 70b of the plate 70 are formed on the upper parts of the steps 24. In this embodiment, a plurality of steps 24 are formed in the shape of stairs on the outer surface 20a of the spring locking piece 20 on the radially outer side.

A guide plate 21 extending downward is connected to the lower end of each of the spring locking pieces 20. The guide plates 21 are formed in a plate shape and are inclined radially inward toward the lower side. The lower ends of the guide plates 21 are connected to the holding leg portion 7 or 8 adjacent to the guide plates 21 and 21. In this embodiment, the guide plates 21 are elastically deformable in the radial direction with the lower ends thereof serving as fulcrums.

Next, the lock arm 40 will be described. The base end of the lock arm 40 is pivotably connected to the distal end of the first holding leg portion 7, and the distal end of the lock arm 40 has an engaged portion 43 engageable with and disengageable from an engaging portion 15 provided at the distal end of the second holding leg portion 8. In this embodiment, the lock arm 40 includes an arm body portion 41 connected to the distal end of the first holding leg portion 7, an arm bent portion 42 protruding from the inner surface of the distal end of the arm body portion 41, and the engaged portion 43 provided at the distal end of the arm bent portion 42. The base end of the arm body portion 41 is connected to the first holding leg portion 7 via a flexible plate-shaped connecting portion 44.

The engaging portion 15 has a recess 15a formed in the outer surface of the lower end of the second holding leg portion 8, and an inner surface 15b on the lower side of the recess 15a is formed in a planar shape extending in the left-right direction (radial direction). Furthermore, the second holding leg portion 8 is provided with, on the outer surface thereof below the recess 15a, a slope guide surface 16 inclined radially outward toward the recess 15a to guide the movement of a projection 45.

The engaged portion 43 has the projection 45 that projects from the distal end of the arm bent portion 42 toward the inner surface of the arm bent portion 42 and that can be engaged with the inner surface 15b of the recess 15a. When the lock arm 40 in an open state is pivoted in a closing direction, the projection 45 moves over the slope guide surface 16 and is engaged with the recess 15a.

Next, a method of attaching the flow control valve 50 to the plate 70 using the adapter 1 will be described with reference to Fig. 12. First, the adapter 1 is attached to the plate 70. Specifically, the first and second holding leg portions 7 and 8 of the adapter 1 are inserted into the attachment hole 71 in the plate 70 from the front surface 70a side of the plate 70. When the holding leg portions 7 and 8 are inserted into the attachment hole 71, the guide plates 21 are deformed radially inward while the outer surfaces of the guide plates 21 slide on the inner surface 71a of the attachment hole 71, and a pair of spring locking pieces 20 and 20 are also deformed radially inward. Accordingly, the pair of spring locking pieces 20 and 20 are inserted into the attachment hole 71.

When the lower surface 2b of the ring part 2 comes into contact with the front surface 70a of the plate 70, the pair of fitting protrusions 4 and 5 are fitted into the attachment hole 71, and the contact surface 24a of any of the plurality of steps 24 comes into contact with the back surface 70b of the plate 70. Accordingly, the adapter 1 is positioned with respect to the plate 70 in the radial direction and the upward direction. Furthermore, any of outer surfaces between the plurality of steps 24 urges the inner surface 71a of the attachment hole 71 radially outward. Thus, it is possible to suppress backlash of the adapter 1 in the radial direction with respect to the plate 70. Furthermore, as a result of the projection 5c of the fitting protrusion 5 being engaged with the engagement groove 72 in the plate 70, it is possible to prevent the adapter 1 from axially rotating with respect to the plate 70.

Next, the flow control valve 50 is attached to the adapter 1. In this case, the flow control valve 50 is inserted into the adapter 1 from the distal end sides of the first and second holding leg portions 7 and 8, and the dial part 60 is moved to the positioning position P, at which the dial part 60 projects to the front surface 70a side of the plate 70. Then, the first and second holding leg portions 7 and 8 are caused to tightly hold the second body 55 of the flow control valve 50, and the first and second holding leg portions 7 and 8 are joined to each other by the lock arm 40. This way, the attachment of the flow control valve 50 to the plate 70 is completed.

As described, in the attaching structure in which the flow control valve 50 is attached to the plate 70 with the adapter 1, the ring part 2 is in contact with the front surface 70a of the plate 70, the first and second holding leg portions 7 and 8 project toward the back surface 70b side of the plate 70 through the attachment hole 71, the dial part 60 extends toward the front surface 70a side of the plate 70 through the attachment hole 71, the second body 55 of the flow control valve 50 is tightly held between the first and second holding leg portions 7 and 8, and the first and second holding leg portions 7 and 8 are joined to each other by the lock arm 40. Hence, no tool is required for the work of attaching the flow control valve 50, and the attaching work is easy. Thus, it is possible to provide the adapter 1 that facilitates the work for attaching the flow control valve 50 to the plate 70, and the attaching structure for the flow control valve 50 using the adapter 1.

In the above-described embodiment, when the flow control valve 50 is positioned with respect to the adapter 1 in the upward direction, the attachment parts 66 and 67 of the first body 51 are brought into contact with the distal end surfaces 4b and 5b of the fitting protrusions 4 and 5. However, the present invention is not limited thereto. If the plate 70 has a larger thickness, the attachment parts 66 and 67 may be brought into contact with the back surface 70b of the plate 70 to position the flow control valve 50 with respect to the adapter 1 in the upward direction.

### Reference Signs List

1 Adapter
2 Ring part
2b Lower surface
4, 5 Fitting protrusion
4a, 5a Side surface
4b, 5b Distal end surface
5c Projection
7 First holding leg portion
8 Second holding leg portion
13 Stopper portion
13a Contact surface
15 Engaging portion
15a Recess
16 Slope guide surface
20 Spring locking piece
20a Outer surface
21 Guide plate
24 Step
40 Lock arm
41 Arm body portion
42 Arm bent portion
43 Engaged portion
45 Projection
50 Flow control valve
51 First body
52a, 52b Input/output port
55 Second body
60 Dial part (flow adjusting part)
70 Plate
70a Front surface
70b Back surface
71 Attachment hole
71a Inner surface
72 Engagement groove

## Claims

1. An adapter (1) for attaching a flow control valve (50) through an attachment hole (71) in a plate (70), the flow control valve (50) including a first body (51) provided with input/output ports (52a, 52b) at both ends thereof, and a second body (55) projecting upward from an intermediate part in a longitudinal direction of the first body (51) and having a flow adjusting part (60) at an upper end thereof,
the adapter (1) comprising: a ring part (2) having a lower surface (2b) to be brought into contact with a periphery of the attachment hole (71) in a front surface (70a) of the plate (70) and allowing the flow adjusting part (60) to pass through the attachment hole (71) toward a front surface (70a) side; a first holding leg portion (7) and a second holding leg portion (8) extending downward from the lower surface (2b) of the ring part (2) at both ends in a radial direction thereof and tightly holding the second body (55) of the flow control valve (50) from both sides in a state of projecting toward a back surface (70b) side of the plate (70) through the attachment hole (71); and a lock arm (40) connecting the first and second holding leg portions (7, 8) to each other,
wherein a base end of the lock arm (40) is pivotably connected to a distal end of the first holding leg portion (7), and a distal end of the lock arm (40) has an engaged portion (43) engageable with and disengageable from an engaging portion (15) provided at a distal end of the second holding leg portion (8).

2. The adapter (1) according to Claim 1, wherein
the ring part (2) is provided with a pair of fitting protrusions (4, 5) protruding from the lower surface (2b) thereof at both ends in the radial direction thereof, and
the fitting protrusions (4, 5) have side surfaces (4a, 5a) to be brought into contact with an inner surface (71a) of the attachment hole (71).

3. The adapter (1) according to Claim 2, wherein one of the side surfaces (4a, 5a) of the fitting protrusions (4, 5) are provided with a projection (5c) to be engaged with an engagement groove (72) provided in the inner surface (71a) of the attachment hole (71) in the plate (70).

4. The adapter (1) according to Claim 2 or 3, wherein
the fitting protrusions (4, 5) have distal end surfaces (4b, 5b) at distal ends thereof, and
the distal end surfaces (4b, 5b) of the fitting protrusions (4, 5) are brought into contact with the flow control valve (50) to enable positioning of the flow control valve (50) in the upward direction.

5. The adapter (1) according to Claim 1, wherein
the ring part (2) is further provided with a pair of spring locking pieces (20) extending downward from the lower surface (2b) thereof at both ends in the radial direction thereof, and
each of the pair of spring locking pieces (20) is inclined radially outward toward a distal side and is elastically deformable radially inward.

6. The adapter (1) according to Claim 5, wherein
the spring locking pieces (20) are provided with steps (24) facing a base side thereof to be brought into contact with a back surface (70b) of the plate (70), and
the steps (24) include a plurality of steps formed in a shape of stairs on outer surfaces (20a) of the spring locking pieces (20) facing radially outward.

7. The adapter (1) according to Claim 6, wherein
the pair of spring locking pieces (20) are disposed on radially outer sides of the first and second holding leg portions (7, 8),
guide plates (21) extending downward are connected to distal ends of the pair of spring locking pieces (20), and
the guide plates (21) are inclined radially inward from the distal ends of the pair of spring locking pieces (20) toward a lower side, and lower ends of the guide plates (21) are connected to the holding leg portion (7, 8) adjacent to the guide plate (21).

8. The adapter (1) according to Claim 1, wherein
the lock arm (40) includes an arm body portion (41) connected to the distal end of the first holding leg portion (7), an arm bent portion (42) protruding from a distal end of the arm body portion (41), and the engaged portion (43) provided at a distal end of the arm bent portion (42),
the engaged portion (43) includes a projection (45) projecting from the distal end of the arm bent portion (42),
the engaging portion (15) of the second holding leg portion (8) includes a recess (15a) formed in an outer surface of the second holding leg portion (8) and engageable with the projection (45), and
a slope guide surface (16) inclined radially outward toward the recess (15a) and guiding movement of the projection (45) is provided on the outer surface of the second holding leg portion (8), at a position closer to a distal end than the recess (15a) is.

9. The adapter (1) according to Claim 1, wherein
the first and second holding leg portions (7, 8) are each provided with a stopper portion (13) protruding radially inward on an inner surface thereof, and
the stopper portion (13) has a contact surface (13a) for supporting the flow control valve (50) tightly held between the first and second holding leg portions (7, 8) from below.

10. A flow control valve (50) attaching structure in which a flow control valve (50) having a flow adjusting part (60) is formed by being attached to an attachment hole (71) in a plate (70) via the adapter (1) according to any preceeding claim, wherein
the flow control valve (50) includes a first body (51) provided with input/output ports (52a, 52b) at both ends thereof, and a second body (55) projecting upward from an intermediate part in a longitudinal direction of the first body (51) and having the flow adjusting part (60) at an upper end thereof,
the plate (70) has the attachment hole (71) through which the flow adjusting part (60) can pass,
the adapter (1) includes the ring part (2) to be brought into contact with a periphery of the attachment hole (71) in a front surface of the plate (70), the first holding leg portion (7) and the second holding leg portion (8) extending downward from the lower surface (2b) of the ring part (2) at both ends in the radial direction thereof to tightly hold the flow control valve (50) from both sides, and the lock arm (40) connects the first and second holding leg portions (7, 8) to each other,
the base end of the lock arm (40) is pivotably connected to the distal end of the first holding leg portion (7), and the distal end of the lock arm (40) has the engaged portion (43) engageable with and disengageable from the engaging portion (15) provided at the distal end of the second holding leg portion (8), and
the ring part (2) is in contact with the front surface (70a) of the plate (70), the first and second holding leg portions (7, 8) protrude toward a back surface (70b) side of the plate (70) through the attachment hole (71), the flow adjusting part (60) passes through the attachment hole (71) toward a front surface (70a) side, the second body (55) of the flow control valve (50) is tightly held between the first and second holding leg portions (7, 8), and the first and second holding leg portions (7, 8) are connected to each other by the lock arm (40).

## Patentansprüche

1. Adapter (1) zum Befestigen eines Durchflussregelventils (50) durch eine Befestigungsbohrung (71) in einer Platte (70), wobei das Durchflussregelventil (50) einen ersten Körper (51), der an beiden Enden mit Einlass-/Auslassöffnungen (52a, 52b) versehen ist, und einen zweiten Körper (55) umfasst, der von einem Zwischenabschnitt in Längsrichtung des ersten Körpers (51) nach oben ragt und an seinem oberen Ende einen Durchflussregelabschnitt (60) aufweist,
wobei der Adapter (1) umfasst: einen Ringabschnitt (2) mit einer Unterseite (2b), die mit einem Umfang der Befestigungsbohrung (71) in einer Vorderseite (70a) der Platte (70) in Kontakt gebracht wird und es ermöglicht, dass der Durchflussregelungsabschnitt (60) durch die Befestigungsbohrung (71) in Richtung der Vorderseite (70a) hindurchtritt; einen ersten Haltearmabschnitt (7) und einen zweiten Haltearmabschnitt (8), die sich an beiden Enden von der Unterseite (2b) des Ringabschnitts (2) in dessen radialer Richtung nach unten erstrecken und den zweiten Körper (55) des Durchflussregelventils (50) von beiden Seiten festhalten, während dieser durch die Befestigungsbohrung (71) in Richtung einer Rückseite (70b) der Platte (70) vorsteht; und einen Verriegelungsarm (40), der den ersten und den zweiten Haltearmabschnitt (7, 8) miteinander verbindet,
wobei ein Basisende des Verriegelungsarms (40) schwenkbar mit einem distalen Ende des ersten Haltearms (7) verbunden ist und ein distales Ende des Verriegelungsarms (40) einen Eingriffsabschnitt (43) aufweist, der mit einem an einem distalen Ende des zweiten Haltearms (8) vorgesehenen Eingriffsabschnitt (15) in Eingriff gebracht und von diesem gelöst werden kann.

2. Adapter (1) nach Anspruch 1, wobei
der Ringabschnitt (2) mit einem Paar von Passvorsprüngen (4, 5) versehen ist, die an beiden Enden in radialer Richtung aus seiner Unterseite (2b) herausragen, und
die Passvorsprünge (4, 5) Seitenflächen (4a, 5a) aufweisen, die mit einer Innenfläche (71a) der Befestigungsbohrung (71) in Kontakt gebracht werden sollen.

3. Adapter (1) nach Anspruch 2, wobei eine der Seitenflächen (4a, 5a) der Passvorsprünge (4, 5) mit einem Vorsprung (5c) versehen ist, der in eine in der Innenfläche (71a) der Befestigungsbohrung (71) in der Platte (70) vorgesehene Eingriffsnut (72) eingreift.

4. Adapter (1) nach Anspruch 2 oder 3, wobei
die Befestigungsvorsprünge (4, 5) an ihren distalen Enden distale Endflächen (4b, 5b) aufweisen und
die distalen Endflächen (4b, 5b) der Passvorsprünge (4, 5) mit dem Durchflussregelventil (50) in Kontakt gebracht werden, um eine Positionierung des Durchflussregelventils (50) in Aufwärtsrichtung zu ermöglichen.

5. Adapter (1) nach Anspruch 1, wobei
der Ringabschnitt (2) ferner mit einem Paar von Federverriegelungsstücken (20) versehen ist, die sich an beiden Enden in radialer Richtung von seiner Unterseite (2b) nach unten erstrecken, und
jedes der beiden Federverriegelungsstücke (20) radial nach außen in Richtung einer distalen Seite geneigt und radial nach innen elastisch verformbar ist.

6. Adapter (1) nach Anspruch 5, wobei
die Federverriegelungsstücke (20) mit Stufen (24) versehen sind, die zu einer Basisseite derselben hin ausgerichtet sind, um mit einer Rückseite (70b) der Platte (70) in Kontakt zu kommen, und
die Stufen (24) eine Vielzahl von Stufen umfassen, die in Form einer Treppe an den radial nach außen weisenden Außenflächen (20a) der Federverriegelungsstücke (20) ausgebildet sind.

7. Adapter (1) nach Anspruch 6, wobei
das Paar von Federverriegelungsstücken (20) an radial äußeren Seiten des ersten und zweiten Haltearms (7, 8) angeordnet ist,
sich nach unten erstreckende Führungsplatten (21) mit den distalen Enden des Paares von Federverriegelungsstücken (20) verbunden sind, und
die Führungsplatten (21) von den distalen Enden des Paares von Federverriegelungsstücken (20) radial nach innen in Richtung einer Unterseite geneigt sind und die unteren Enden der Führungsplatten (21) mit dem Haltearmabschnitt (7, 8) verbunden sind, der an die Führungsplatte (21) angrenzt.

8. Adapter (1) nach Anspruch 1, wobei
der Verriegelungsarm (40) einen mit dem distalen Ende des ersten Haltearmabschnitts (7) verbundenen Armkörperabschnitt (41), einen vom distalen Ende des Armkörperabschnitts (41) vorstehenden Arm-Biegeabschnitt (42) und den an einem distalen Ende des Arm-Biegeabschnitts (42) vorgesehenen Eingriffsabschnitt (43) umfasst,
der Eingriffsabschnitt (43) einen Vorsprung (45) aufweist, der vom distalen Ende des gebogenen Armabschnitts (42) vorsteht,
der Eingriffsabschnitt (15) des zweiten Haltearmabschnitts (8) eine in einer Außenfläche des zweiten Haltearmabschnitts (8) ausgebildete Aussparung (15a) aufweist, die mit dem Vorsprung (45) in Eingriff bringbar ist, und
an der Außenfläche des zweiten Haltearmabschnitts (8) eine radial nach außen in Richtung der Aussparung (15a) geneigte Führungsfläche (16) vorgesehen ist, die die Bewegung des Vorsprungs (45) führt, und zwar an einer Stelle, die näher am distalen Ende liegt als die Aussparung (15a).

9. Adapter (1) nach Anspruch 1, wobei
der erste und der zweite Haltearmabschnitt (7, 8) jeweils mit einem Anschlagabschnitt (13) versehen sind, der an ihrer Innenfläche radial nach innen vorsteht, und
der Anschlagabschnitt (13) eine Kontaktfläche (13a) aufweist, um das zwischen dem ersten und dem zweiten Haltearmabschnitt (7, 8) festgehaltene Durchflussregelventil (50) von unten abzustützen.

10. Befestigungsvorrichtung für ein Durchflussregelventil (50), bei der das Durchflussregelventil (50) mit einem Durchflussregelabschnitt (60) durch Befestigung an einer Befestigungsbohrung (71) in einer Platte (70) über einen Adapter (1) nach einem vorhergehenden Anspruch ausgebildet ist, wobei
das Durchflussregelventil (50) einen ersten Körper (51), der an beiden Enden mit Einlass-/Auslassöffnungen (52a, 52b) versehen ist, und einen zweiten Körper (55) umfasst, der von einem Zwischenabschnitt in Längsrichtung des ersten Körpers (51) nach oben ragt und an seinem oberen Ende den Durchflussregelabschnitt (60) aufweist,
die Platte (70) die Befestigungsbohrung (71) aufweist, durch die der Durchflussregelabschnitt (60) hindurchgeführt werden kann,
der Adapter (1) den Ringabschnitt (2) umfasst, der mit einem Umfang der Befestigungsbohrung (71) in einer Vorderseite der Platte (70) in Kontakt gebracht wird, den ersten Haltearmabschnitt (7) und den zweiten Haltearmabschnitt (8), die sich an beiden Enden von der Unterseite (2b) des Ringabschnitts (2) in dessen radialer Richtung nach unten erstrecken, um das Durchflussregelventil (50) von beiden Seiten festzuhalten, sowie den Verriegelungsarm (40), der den ersten und den zweiten Haltearmabschnitt (7, 8) miteinander verbindet,
wobei das Basisende des Verriegelungsarms (40) schwenkbar mit dem distalen Ende des ersten Haltearmabschnitts (7) verbunden ist und das distale Ende des Verriegelungsarms (40) den Eingriffsabschnitt (43) aufweist, der mit dem an dem distalen Ende des zweiten Haltearmabschnitts (8) vorgesehenen Eingriffsabschnitt (15) in Eingriff gebracht und von diesem gelöst werden kann, und
der Ringabschnitt (2) mit der Vorderseite (70a) der Platte (70) in Kontakt steht, der erste und der zweite Haltearmabschnitt (7, 8) durch das Befestigungsloch (71) hindurch zur Rückseite (70b) der Platte (70) hin vorstehen, der Durchflussregelabschnitt (60) durch die Befestigungsbohrung (71) in Richtung der Vorderseite (70a) verläuft, der zweite Körper (55) des Durchflussregelventils (50) fest zwischen dem ersten und dem zweiten Haltearmabschnitt (7, 8) gehalten wird, und der erste und der zweite Haltearmabschnitt (7, 8) durch den Verriegelungsarm (40) miteinander verbunden sind.

## Revendications

1. Adaptateur (1) destiné à fixer une soupape de régulation de débit (50) à travers un trou de fixation (71) dans une plaque (70), la soupape de régulation de débit (50) comprenant un premier corps (51) doté d'orifices d'entrée/sortie (52a, 52b) aux deux extrémités de celui-ci, ainsi qu'un deuxième corps (55) faisant saillie vers le haut à partir d'une partie intermédiaire dans une direction longitudinale du premier corps (51) et comportant une partie de réglage de débit (60) à une extrémité supérieure de celui-ci,
l'adaptateur (1) comprenant : une partie annulaire (2) comportant une surface inférieure (2b) destinée à être mise en contact avec une périphérie du trou de fixation (71) dans une surface avant (70a) de la plaque (70) et permettant à la partie de réglage de débit (60) de traverser le trou de fixation (71) vers le côté de la surface avant (70a) ; une première portion de branche de maintien (7) et une deuxième portion de branche de maintien (8) s'étendant vers le bas depuis la surface inférieure (2b) de la partie annulaire (2), aux deux extrémités dans une direction radiale de celle-ci, et maintenant fermement le deuxième corps (55) de la soupape de régulation de débit (50) par les deux côtés, dans un état où elles font saillie vers le côté de la surface arrière (70b) de la plaque (70) à travers le trou de fixation (71) ; et un bras de verrouillage (40) reliant les première et deuxième portions de branche de maintien (7, 8) l'une à l'autre,
dans lequel une extrémité de base du bras de verrouillage (40) est reliée de façon pivotante à une extrémité distale de la première portion de branche de maintien (7), et une extrémité distale du bras de verrouillage (40) comporte une portion engagée (43) apte à s'engager avec une partie d'engagement (15) disposée à une extrémité distale de la deuxième portion de branche de maintien (8), et à se désengager de celle-ci.

2. Adaptateur (1) selon la revendication 1, dans lequel
la partie annulaire (2) est dotée d'une paire de saillies d'ajustement (4, 5) faisant saillie à partir de la surface inférieure (2b) de celle-ci, aux deux extrémités dans la direction radiale de celle-ci, et
les saillies d'ajustement (4, 5) comportent des surfaces latérales (4a, 5a) destinées à être mises en contact avec une surface intérieure (71a) du trou de fixation (71).

3. Adaptateur (1) selon la revendication 2, dans lequel l'une des surfaces latérales (4a, 5a) des saillies d'ajustement (4, 5) est dotée d'une saillie (5c) destinée à s'engager avec une rainure d'engagement (72) disposée dans la surface intérieure (71a) du trou de fixation (71) dans la plaque (70).

4. Adaptateur (1) selon la revendication 2 ou 3, dans lequel
les saillies d'ajustement (4, 5) comportent des surfaces d'extrémité distales (4b, 5b) à des extrémités distales de celles-ci, et
les surfaces d'extrémité distales (4b, 5b) des saillies d'ajustement (4, 5) sont mises en contact avec la soupape de régulation de débit (50) pour permettre le positionnement de la soupape de régulation de débit (50) dans la direction vers le haut.

5. Adaptateur (1) selon la revendication 1, dans lequel
la partie annulaire (2) est en outre dotée d'une paire d'éléments de verrouillage à ressort (20) s'étendant vers le bas à partir de la surface inférieure (2b) de celle-ci, aux deux extrémités dans la direction radiale de celle-ci, et
chacun de la paire d'éléments de verrouillage à ressort (20) est incliné radialement vers l'extérieur, vers un côté distal, et déformable élastiquement radialement vers l'intérieur.

6. Adaptateur (1) selon la revendication 5, dans lequel
les éléments de verrouillage à ressort (20) sont dotés de gradins (24) orientés vers un côté de base de ceux-ci et destinés à être mis en contact avec une surface arrière (70b) de la plaque (70), et
les gradins (24) comprennent une pluralité de gradins sou la forme d'escaliers sur des surfaces extérieures (20a) des éléments de verrouillage à ressort (20) orientées radialement vers l'extérieur.

7. Adaptateur (1) selon la revendication 6, dans lequel
la paire d'éléments de verrouillage à ressort (20) est disposée sur des côtés radialement extérieurs des première et deuxième portions de branche de maintien (7, 8),
des plaques de guidage (21) s'étendant vers le bas sont reliées à des extrémités distales de la paire d'éléments de verrouillage à ressort (20), et
les plaques de guidage (21) sont inclinées radialement vers l'intérieur à partir des extrémités distales de la paire d'éléments de verrouillage à ressort (20) vers un côté inférieur, et des extrémités inférieures des plaques de guidage (21) sont reliées à la portion de branche de maintien (7, 8) adjacente à la plaque de guidage (21).

8. Adaptateur (1) selon la revendication 1, dans lequel
le bras de verrouillage (40) comprend une portion de corps de bras (41) reliée à l'extrémité distale de la première portion de branche de maintien (7), une portion courbée de bras (42) faisant saillie à partir d'une extrémité distale de la portion de corps de bras (41), et la portion engagée (43) disposée à une extrémité distale de la portion courbée de bras (42),
la portion engagée (43) comprend une saillie (45) faisant saillie à partir de l'extrémité distale de la portion courbée de bras (42),
la partie d'engagement (15) de la deuxième portion de branche de maintien (8) comprend une cavité (15a) formée dans une surface extérieure de la deuxième portion de branche de maintien (8) et apte à s'engager avec la saillie (45), et
une surface de guidage inclinée (16) inclinée radialement vers l'extérieur en direction de la cavité (15a) et guidant le déplacement de la saillie (45) est disposée sur la surface extérieure de la deuxième portion de branche de maintien (8), à une position plus proche d'une extrémité distale que la cavité (15a).

9. Adaptateur (1) selon la revendication 1, dans lequel
les première et deuxième portions de branche de maintien (7, 8) sont dotées respectivement d'une portion de butée (13) faisant saillie radialement vers l'intérieur sur une surface intérieure de celles-ci, et
la portion de butée (13) comporte une surface de contact (13a) destinée à soutenir, par le dessous, la soupape de régulation de débit (50) maintenue fermement entre les première et deuxième portions de branche de maintien (7, 8).

10. Structure de fixation d'une soupape de régulation de débit (50), dans laquelle une soupape de régulation de débit (50) comportant une partie de réglage de débit (60) est formée en étant fixée à un trou de fixation (71) dans une plaque (70) par l'intermédiaire de l'adaptateur (1) selon l'une quelconque des revendications précédentes, dans laquelle
la soupape de régulation de débit (50) comprend un premier corps (51) doté d'orifices d'entrée/sortie (52a, 52b) aux deux extrémités de celui-ci, ainsi qu'un deuxième corps (55) faisant saillie vers le haut à partir d'une partie intermédiaire dans une direction longitudinale du premier corps (51) et comportant une partie de réglage de débit (60) à une extrémité supérieure de celui-ci,
la plaque (70) comporte le trou de fixation (71) à travers lequel la partie de réglage de débit (60) peut passer,
l'adaptateur (1) comprend la partie annulaire (2) destinée à être mise en contact avec une périphérie du trou de fixation (71) dans une surface avant de la plaque (70), la première portion de branche de maintien (7) et la deuxième portion de branche de maintien (8) s'étendant vers le bas depuis la surface inférieure (2b) de la partie annulaire (2) aux deux extrémités dans une direction radiale de celle-ci, afin de maintenir fermement la soupape de régulation de débit (50) par les deux côtés, et le bras de verrouillage (40) relie les première et deuxième portions de branche de maintien (7, 8) l'une à l'autre,
l'extrémité de base du bras de verrouillage (40) est reliée de façon pivotante à l'extrémité distale de la première portion de branche de maintien (7), et l'extrémité distale du bras de verrouillage (40) comporte la portion engagée (43) apte à s'engager avec la partie d'engagement (15) disposée à l'extrémité distale de la deuxième portion de branche de maintien (8), et à se désengager de celle-ci, et
la partie annulaire (2) est en contact avec la surface avant (70a) de la plaque (70), les première et deuxième portions de branche de maintien (7, 8) font saillie vers le côté de la surface arrière (70b) de la plaque (70) à travers le trou de fixation (71), la partie de réglage de débit (60) traverse le trou de fixation (71) vers un côté de surface avant (70a), le deuxième corps (55) de la soupape de régulation de débit (50) est maintenu fermement entre les première et deuxième portions de branche de maintien (7, 8), et les première et deuxième portions de branche de maintien (7, 8) sont reliées l'une à l'autre par le bras de verrouillage (40).
